# EUROPEAN PATENT SPECIFICATION

(11) **EP 0 321 250 B1**
(45) Date of publication and mention of the grant of the patent: **13.10.1993**
(21) Application number: 88311888.7
(22) Date of filing: 15.12.1988
(51) Int. Cl.: G11B 11/10, G11B 5/64

(54) **Magneto-optic memory device**
Magneto-optisches Speichergerät
Dispositif de mémoire magnéto-optique

(30) Priority: 15.12.1987 JP 317757/87; 15.12.1987 JP 317759/87
(43) Date of publication of application: 21.06.1989
(73) Proprietor: SHARP KABUSHIKI KAISHA, Osaka 545 (JP)
(72) Inventor: Murakami, Yoshiteru, Nishinomiya-shi Hyogo-ken (JP); Nakayama, Junichiro, Shiki-gun Nara-ken (JP); Hiramatsu, Ichiro, Nara-shi Nara-ken (JP); Takahashi, Akira, Nara-shi Nara-ken (JP); Ohta, Kenji, Kitakatsuragi-gun Nara-ken (JP); Van, Kazuo, Nara-shi Nara-ken (JP); Katayama, Hiroyuki, Nara-shi Nara-ken (JP)
(74) Representative: Brown, Kenneth Richard

(56) References cited:
- EP-A- 0 139 474
- EP-A- 0 239 390
- FR-A- 2 485 241
- US-A- 4 579 777

## Description

### BACKGROUND OF THE INVENTION

### 1. Field of the Invention

The present invention relates to magneto-optic memory devices, and more particularly to magneto-optic memory devices, such as magneto-optic discs and magneto-optic cards, which are adapted to record data thereon and reproduce or erase the data therefrom when exposed, for example, to a laser beam.

### 2. Description of the Prior Art

Active research has been conducted in recent years for the development of magneto-optic memory devices as optical memory devices adapted for recording, reproducing and erasing data. Especially attention has been directed to devices wherein a rare earth-transition metal alloy thin film is used as the memory medium because the recording bits are free of the influence of the grain boundary and further because the film serving as the memory medium can be formed over a large area relatively easily. However, the magneto-optic memory devices incorporating the rare earth-transition metal alloy thin film as the memory medium generally fail to exhibit satisfactory magneto optic effects (Kerr effect and Faraday effect) and therefore still remain to be improved in the S/N ratio of reproduction signals. To overcome this problem, the so-called reflective film structure is employed for magneto-optic memory devices as already disclosed, for example, in Unexamined Japanese Patent Publication SHO 57-12428 and Applied Optics, Vol. 23, No. 22, p. 3972.

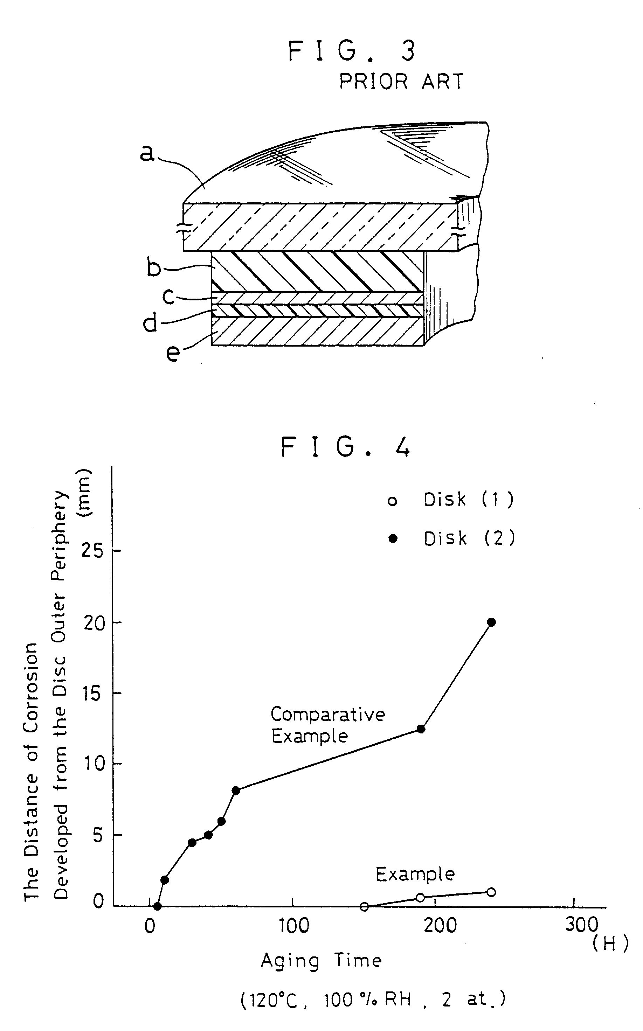

Fig. 3 is a view partly in vertical section and showing a conventional magneto-optic memory device of reflective film structure. With reference to the drawing, indicated at a is a transparent substrate of glass, polycarbonate resin, epoxy resin or the like, at b a transparent dielectric film having a higher refractive index than the substrate a, at c a rare earth-transition metal alloy thin film, at d a transparent dielectric film, and at e a light reflecting film of metal.

With the memory device of the above construction, the rare earth-transition metal alloy film c is so thin that the light incident on the film c partly passes through the film. Consequently, reproduction light exhibits the Kerr effect due to the reflection at the surface of the film c and, in combination therewith, the Faraday effect which is produced by the portion of the light passing through the film c, reflected at the reflecting film e and passing through the film c again. This results in a Kerr rotation angle which is apparently several times as great as the angle afforded by the Kerr effect only. For example, the device shown in Fig. 3 exhibits an increased apparent Kerr rotation angle of 1.6 degrees (although a single GdTbFe film is about 0.3 degree in this angle) when the device comprises a glass substrate as the transparent substrate a, AlN film as the transparent dielectric film b, GdTbFe fi)m as the rare earth-transition metal alloy film c, AlN film as the transparent dielectric film d and Al film as the light reflecting film e.

Nevertheless, the rare earth-transition metal alloy thin film is very susceptible to oxidation in the presence of moisture and loses the inherent magneto-optic characteristics thereof on oxidation. Especially with the device of the basic reflective film structure described above wherein the alloy film c needs to transmit light therethrough, the film is more prone to the influence of oxidation because the film must have a considerably decreased thickness and also because the film is left exposed at its end. In other words, the device has the problem of being poor in long term reliability.

Accordingly, the device of reflective film structure described above is used usually with another substrate laminated to the reflecting film with an adhesive layer. The adhesive layer is used for covering the entire magneto-optic memory layer comprising the dielectric film b, alloy film c, dielectric film d and light reflecting film e and also for adhering the other substrate.

When the device is in this form, it is expected that the magneto-optic memory layer including the alloy film will be held out of direct contact with the atmosphere, with the alloy film protected against oxidation, so as to assure the device of reliability.

Nevertheless, the structure thus sealing off the device from the atmosphere still encounters difficulty in assuring long term reliability.

The object of the present invention is to overcome the foregoing problem and to provide a magneto-optic memory device of reflective film structure which exhibits outstanding magneto-optic characteristics over a prolonged period of time.

### SUMMARY OF THE INVENTION

We have conducted intensive research thinking that the degradation of the magneto-optic characteristics of the device which is sealed-off from the atmosphere is attributable to the low adhesion of the adhesive layer to the light reflecting metal film, such that the entire adhesive layer becomes impaired in adhesion, permitting atmospheric moisture to penetrate through the adhesive joint and consequently entailing progressive degradation of the rare earth-transition metal alloy thin film.

Our research has revealed that the reliability of the device having the structure described above can be remarkably improved by forming a metal nitride film over the light reflecting film of the magneto-optic memory layer.

Thus, the present invention provides a magneto-optic memory device comprising a first, transparent substrate on which is mounted a magneto-optic memory film of rare earth-transition metal alloy with a reflecting film disposed to the side of said memory film remote from said first substrate; and a second substrate bonded by an adhesive layer to the first substrate with said memory and reflecting films disposed therebetween, characterised by the provision of a film comprising a metal nitride between the reflecting film and the adhesive layer.

The magneto-optic memory device of the present invention is remarkably improved in moistureproofness and consequently greatly improved in reliability without impairing the inherent magneto-optic characteristics thereof.

The second substrate opposed to the first (transparent) substrate may be formed with the same metal nitride film as above over the surface thereof opposed to the transparent substrate. The use of this metal nitride film on the second substrate further improves the memory device in moistureproofness and reliability.

### BRIEF DESCRIPTION OF THE DRAWINGS

Figs. 1 and 2 are fragmentary views partly in vertical section and each showing a magneto-optic memory device, more specifically, a magneto-optic disc, embodying the invention;
Fig. 3 is a fragmentary view in vertical section and showing a conventional magneto-optic disc; and
Fig. 4 is a graph showing the moistureproofness of the memory device of the invention in comparison with that of a comparative device.

### DESCRIPTION OF THE PREFERRED EMBODIMENTS

According to the invention, a pair of substrates are used, at least one (the first) of which is a transparent substrate. The transparent substrate can be prepared from glass, polycarbonate resin, acrylic resin, epoxy resin or like plastics. The other (second) substrate, which may be a similar transparent substrate, can be a nontransparent substrate, for example, of aluminium or ceramics.

Examples of useful dielectric films for forming a magneto-optic memory layer with the memory film are transparent metal nitride film, metal oxide films, metal sulfide films and the like, such as silicon nitride, aluminium nitride, silicon oxide, aluminium oxide and zinc sulfide films. The dielectric film may be doped with a hetero element such as yttrium, oxygen, carbon or the like and thereby given a higher dielectric constant. The dielectric film can be formed by a known process such as CVD, sputtering or the like. A first dielectric film is formed on the transparent substrate and a second on a rare earth-transition metal alloy thin film. To be suitable, the dielectric film on the transparent substrate has a thickness of 50 to 100 nm, and the one on the alloy thin film is 10 to 100 nm in thickness.

The rare earth-transition metal alloy thin memory film can be made of an alloy used in the art, such as GdTbFeCo, TbFeCo, TbCo, TbFe or like alloy. However, it is desirable to use a thin film of a rare earth-transition metal alloy or the composition:

(GdₓTb₁₋ₓ)_{y}Fe_{1-y}

wherein most preferably, x is 0.58 to 0.62, and y is 0.27 to 0.33. Use of the alloy of the composition wherein x and y are in these ranges affords magneto-optic memory devices giving data reproduction signals of a high quality, especially a high C/N ratio (carrier to noise ratio) in excess of 50 dB.

Such an alloy film can be formed on the dielectric film by CVD, sputtering or the like known process. It is suitable that the film be 5 nm to 100 nm in thickness. To inhibit the possible corrosion due to moisture, the alloy film may be doped with a small quantity of corrosion-resistant metal atoms such as Cr, Ti, Al, Ta, Ni or like atoms.

The light reflecting film is a metal film capable of reflecting light efficiently and having high corrosion resistance. Examples of metals useful for the reflecting film are aluminium, nickel, titanium, gold, silver, tantalum, stainless steel and the like. Also usable are alloys of such metals including, for example, aluminum-nickel alloy and aluminum-titanium alloy. It is especially desirable to use aluminum or aluminum alloy. The reflecting film can be formed by a known process such as CVD or sputtering and is suitably 10 to 300 nm in thickness.

The magneto-optic memory layer composed of the films described above is formed usually on a portion of the transparent substrate.

The adhesive for covering the memory layer and bonding the other substrate can be one of various adhesives known in the art and including those curable at room temperature, by heating or with ultraviolet radiation or electron rays. Of these, it is suitable to use one having high moisture resistance. More specific examples of such adhesives are cyano-acrylate adhesives [Aron Alpha (Toagosei Chemical Industry Co., Ltd., Japan), Cyanobond (Sumitomo Chemical Co., Ltd., Japan)], ultaviolet-curable adhesives [Three Bond 3000 series (Three Bond Co., Ltd., Japan), Photobond (Meisei Churchill Co., Ltd., Japan)], aerophobic adhesives [Loctite (Japan Loctite Co., Ltd., Japan), Three Bond 1300 series], epoxy adhesives [Araldite (CIBA), Sumikadine (Sumitomo Chemical Co., Ltd.), Cemedine (Cemedine Co., Ltd., Japan)], two-component nonmixing modified acrylic adhesive [Visset (Matsumoto Chemical Industry Co., Ltd., Japan)], hotmelt adhesives [H series and HR series (Nitta Gelatin Co., Ltd., Japan)], etc.

According to the present invention, a metal nitride film is formed on the magneto-optic memory layer, i.e. on the light reflecting film, before the other substrate is bonded to the memory layer with the adhesive. Examples of suitable metal nitride films are silicon nitride, aluminum nitride, silicon-aluminum nitride films and the like, among which aluminum nitride film is preferable to use. Like the other films, the metal nitride film can be formed by CVD, sputtering or like process. The thickness of this film is suitably 5 to 1000 nm, more suitably 10 to 500 nm.

After the metal nitride film has been formed, the other substrate is bonded to the film by applying and curing the adhesive, whereby a magneto-optic memory device of the invention can be obtained.

As already mentioned, the other substrate is preferably one formed with the same metal nitride film as above on the surface thereof opposed to the transparent substrate. In this case, it is desired that the nitride film be formed at least over the area opposed to and covering the memory layer.

The configuration of the memory device thus obtained, as seen from above, is not limited specifically. For example, the device is in the form of a disk (magneto-optic disc) or rectangular (magneto-optic card).

### EXAMPLES

Magneto-optic memory devices embodying the invention will be described with reference to the drawings concerned.

### Example 1

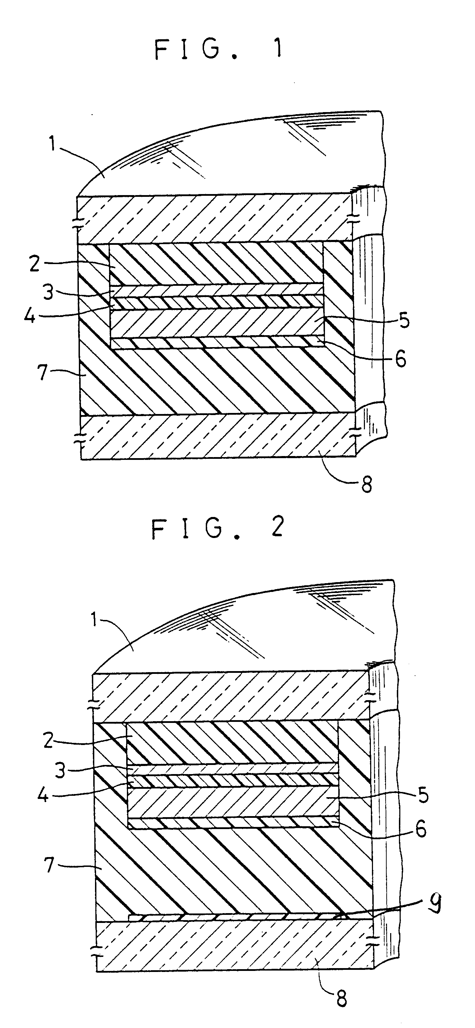

Fig. 1 is a view partly in vertical section and showing the structure of a magneto-optic disc as an example of memory device of the invention. With reference to this drawing, indicated at 1 is a transparent glass substrate, 1.2 mm in thickness and 13 cm in diameter. A first transparent dielectric film 2 having a thickness of 80 nm and made of transparent aluminum nitride (AlN) is formed on the transparent substrate 1. Formed over the film 2 is a thin film (recording medium) 3 having a thickness of 20 nm and made of a rare earth-transition metal alloy of the composition

(GdₓTb₁₋ₓ)_{y}Fe_{1-y}

wherein x is 0.58 to 0.62, and y is 0.27 to 0.33. A second transparent dielectric film 4 of transparent aluminum nitride (AlN), 25 nm in thickness, is formed over the alloy film 3. A light reflecting film 5 of aluminum (Al), 50 nm in thickness, is formed over the dielectric film 4, and a metal nitride (AlN) film 6, 20 nm in thickness, over the reflecting film 5.

The magneto-optic memory layer comprising these films is covered in its entirety with a layer 7 of acrylate adhesive cured with ultraviolet radiation. A transparent glass substrate 8 having the same size as the substrate 1 and spaced therefrom by a distance of about 30 µm is bonded to the memory layer.

Described below are an experiment conducted for checking the magneto-optic disc for reliability and the result of the experiment.

Generally, the reliability of magneto-optic memory devices is evaluated by checking the devices for moistureproofness. The moistureproofness is determined usually by subjecting the device to a so-called accelerated test wherein the device is allowed to stand at a high temperature and high humidity, and observing the resulting pinholes with the unaided eye or microscopically to evaluate the moistureproofness in terms of the susceptibility of the device to pinholes. The term "pinhole" as used herein refers to local oxidation of the thin film forming the device to a transparent oxide, which appears like a pinhole as distinguished from the neighboring nonoxidized portion.

In the present experiment, the moistureproofness was evaluated by the above method. The accelerated test was conducted under the conditions of the so-called pressure cooker test, i.e. at 120° C/100% RH at 2 atm. The test samples were the following two kinds of devices.
(1) The above embodiment of the invention, i.e., magneto-optic disc.
(2) A conventional magneto-optic disc having the same construction as the disc (1) except that the metal nitride film 6 was absent.

The samples were checked for pinholes at an interval of 2 hours after the start of testing.

Consequently, pinholes were observed in the conventional disc (2) four hours after the start of testing, whereas no pinholes were found in the disc (1) of the invention for 150 hours after the start of testing. Thus, the device of the invention was at least 30 times as high as the conventional one in moistureproofness. This appears to indicate that the adhesive exhibits higher adhesion to the metal nitride film 6 than to the light reflecting film 5, inhibiting penetration of moisture or water into the memory layer.

In the present test, the devices were checked not only for the occcurrence of pinholes but also for the distance of corrosion developed from the disc outer periphery with the lapse of time. Fig. 4 shows the result.

### Example 2

A magneto-optic disc of the invention was prepared which had the same construction as the device of Example 1 except that the transparent glass substrate 8 used in Example 1 was replaced by a similar substrate 8 formed with a metal nitride film 9 (5 nm in thickness) on its surface, as seen in Fig. 2.

This disc (3) and a magneto-optic disc (4) having the same construction as the disc (3) except that the metal nitride film 6 was absent (comparative example were subjected to the same pressure cooker test as in Example 1 for the evaluation of moistureproofness.

Consequently, pinholes were observed in the disc (4) four hours after the start of testing, whereas no pinholes were found in the disc (3) of the invention for 40 hours after the start of testing. Thus, the disc (3) was at least 10 times as high as the disc (4) in moistureproofness.

It will be understood that the term metal is normally taken to include certain elements, sometimes called metalloids, which exhibit some of the properties of true metals, silicon being an example thereof; the term metal is so used herein.

The invention being thus described, it will be obvious that the same may be varied in many ways.

There are described above novel features which the skilled man will appreciate give rise to advantages.

## Claims

1. A magneto-optic memory device comprising a first, transparent substrate (1) on which is mounted a magneto-optic memory film (3) of rare earth-transition metal alloy with a reflecting film (5) disposed to the side of said memory film remote from said first substrate (1); and a second substrate (8) bonded by an adhesive layer (7) to the first substrate with said memory and reflecting films disposed therebetween, characterised by the provision of a film (6) comprising a metal nitride between the reflecting film (5) and the adhesive layer (7).

2. A magneto-optic memory device according to claim 1 and further comprising:
a first dielectric film (2), disposed between the first substrate and the memory film and a second dielectric film (4) disposed between the memory film and the reflecting film.

3. A magneto-optic memory device according to claim 1 or claim 2 in which the metal nitride film (6) is made of silicon nitride, aluminium nitride or silicon-aluminium nitride.

4. A magneto-optic memory device according to any preceding claim in which the metal nitride film has a thickness of 5 to 1000 nm.

5. A magneto-optic memory device according to claim 4 in which the metal nitride film has a thickness of 10 to 500 nm.

6. A magneto-optic memory device according to any preceding claim in which the memory film is made of GdTbFe, GdTbFeco, TbFeCo, TbCo or TbFe alloy.

7. A magneto-optic memory device according to claim 6 in which the memory film is made of GdTbFe alloy.

8. A magneto-optic memory device according to claim 7 in which the GdTbFe alloy has the composition formula:
(GdₓTb₁₋ₓ)_{y}Fe_{1-y}
wherein x is 0.58 to 0.62 and y is 0.27 to 0.33.

9. A magneto-optic memory device according to any preceding claim in which the memory film has a thickness of 5 to 100 nm.

10. A magneto-optic memory device according to claim 2 or any claim dependent thereon, in which the first and second dielectric films are each made of a metal nitride, a metal oxide or a metal sulfide.

11. A magneto-optic memory device according to claim 2 or any claim dependent thereon, in which the first dielectric film has a thickness of 50 to 100 nm and the second dielectric film has a thickness of 10 to 100 nm.

12. A magneto-optic memory device according to any preceding claim in which the light reflecting film is made of aluminium, nickel, titanium, gold, silver, tantalum, aluminium-nickel alloy or aluminium-titanium alloy.

13. A magneto-optic memory device according to any preceding claim, in which the light reflecting film has a thickness of 10 to 300 nm.

14. A magneto-optic memory device according to any preceding claim, in which the first substrate is a glass, polycarbonate resin, acrylic resin or epoxy resin substrate.

15. A magneto-optic memory device according to any preceding claim in which the second substrate is a glass, polycarbonate resin, acrylic resin, epoxy resin, aluminium or a ceramics substrate.

16. A magneto-optic memory device according to any preceding claim in which the second substrate has a metal nitride film (9) on its surface opposed to the first substrate.

17. A device of Claim 1 which is in disk or rectangular form.

## Patentansprüche

1. Magneto-optische Speichereinrichtung mit einem ersten, lichtdurchlässigen Substrat (1), auf dem ein magneto-optischer Speicherfilm (3) aus einer Seltenerd/Übergangsmetall-Legierung aufgebracht ist, wobei ein Reflexionsfilm (5) auf der dem ersten Substrat (1) abgewandten Seite dieses Speicherfilms angeordnet ist; und einem zweiten Substrat (8), das durch eine Kleberschicht (5) mit dem ersten Substrat verbunden ist, wobei der Speicher- und der Reflexionsfilm dazwischenliegen, **gekennzeichnet durch** einen Film (6) mit einem Metallnitrid zwischen dem Reflexionsfilm (5) und der Kleberschicht (7).

2. Magneto-optische Speichereinrichtung nach Anspruch 1, die ferner folgendes aufweist:
- einen ersten dielektrischen Film (2), der zwischen dem ersten Substrat und dem Speicherfilm angeordnet ist, und einen zweiten dielektrischen Film (4), der zwischen dem Speicherfilm und dem Reflexionsfilm angeordnet ist.

3. Magneto-optische Speichereinrichtung nach Anspruch 1 oder Anspruch 2, bei der der Metallnitridfilm (6) aus Siliziumnitrid, Aluminiumnitrid oder Silizium-Aluminium-Nitrid besteht.

4. Magneto-optische Speichereinrichtung nach einem der vorstehenden Ansprüche, bei der der Metallnitridfilm eine Dicke von 5 bis 1.000 nm aufweist.

5. Magneto-optische Speichereinrichtung nach Anspruch 4, bei der der Metallnitridfilm eine Dicke von 10 bis 500 nm aufweist.

6. Magneto-optische Speichereinrichtung nach einem der vorstehenden Ansprüche, bei der der Speicherfilm aus einer GdTbFe-, GdTbFeCo-, TbFeCo-, TbCo- oder TbFe-Legierung besteht.

7. Magneto-optische Speichereinrichtung nach Anspruch 6, bei der der Speicherfilm aus einer GdTbFe-Legierung besteht.

8. Magneto-optische Speichereinrichtung nach Anspruch 7, bei der die GdTbFe-Legierung die folgende Verbindungsformel aufweist:
(GdₓTb₁₋ₓ)_{y}Fe_{1-y}
wobei x 0,58 bis 0,62 und y 0,27 bis 0,33 sind.

9. Magneto-optische Speichereinrichtung nach einem der vorstehenden Ansprüche, bei der der Speicherfilm eine Dicke von 5 bis 100 nm aufweist.

10. Magneto-optische Speichereinrichtung nach Anspruch 2 oder einem von diesem abhängigen Anspruch, bei der der erste und der zweite dielektrische Film jeweils aus einem Metallnitrid, einem Metalloxid oder einem Metallsulfid bestehen.

11. Magneto-optische Speichereinrichtung nach Anspruch 2 oder nach einem von diesem abhängigen Anspruch, bei der der erste dielektrische Film eine Dicke von 50 bis 100 nm und der zweite dielektrische Film eine Dicke von 10 bis 100 nm aufweisen.

12. Magneto-optische Speichereinrichtung nach einem der vorstehenden Ansprüche, bei der der Lichtreflexionsfilm aus Aluminium, Nickel, Titan, Gold, Silber, Tantal, einer Aluminium-Nickel-Legierung oder einer Aluminium-Titan-Legierung besteht.

13. Magneto-optische Speichereinrichtung nach einem der vorstehenden Ansprüche, bei der der Lichtreflexionsfilm eine Dicke von 10 bis 300 nm aufweist.

14. Magneto-optische Speichereinrichtung nach einem der vorstehenden Ansprüche, bei der das erste Substrat ein Glas-, Polycarbonatharz-, Acrylharz- oder Epoxidharzsubstrat ist.

15. Magneto-optische Speichereinrichtung nach einem der vorstehenden Ansprüche, bei der das zweite Substrat ein Glas-, Polycarbonatharz-, Acrylharz-, Epoxidharz-, Aluminium- oder Keramiksubstrat ist.

16. Magneto-optische Speichereinrichtung nach einem der vorstehenden Ansprüche, bei der das zweite Substrat auf seiner dem ersten Substrat gegenüberliegenden Oberfläche einen Metallnitridfilm (9) aufweist.

17. Einrichtung nach Anspruch 1, die in Form einer Platte oder eines Rechtecks vorliegt.

## Revendications

1. Dispositif magnéto-optique comprenant un premier substrat (1) transparent sur lequel est monté un film de mémoire magnéto-optique (3) en alliage terre rare-métal de transition avec un film réfléchissant (5) disposé sur le côté dudit film de mémoire éloigné dudit premier substrat (1); et un second substrat (8) lié par une couche adhésive (7) au premier substrat avec ladite mémoire et les films réfléchissants disposés entre ceux-ci, caractérisé par la présence d'un film (6) comprenant du nitrure de métal entre le film réfléchissant (5) et la couche adhésive (7).

2. Dispositif de mémoire magnéto-optique, selon la revendication 1 et comprenant en outre :
un premier film diélectrique (2), disposé entre le premier substrat et le film de mémoire, et
un second film diélectrique (4) disposé entre le film de mémoire et le film réfléchissant.

3. Dispositif de mémoire magnéto-optique, selon la revendciation 1 ou la revendication 2 dans lequel le film en nitrure de métal (6) est fait de nitrure de silicium, de nitrure d'aluminium ou de nitrure de silicium-aluminium.

4. Dispositif de mémoire magnéto-optique, selon l'une quelconque des revendications précédentes dans lequel le film en nitrure de métal a une épaisseur de 5 à 1000 nm.

5. Dispositif de mémoire magnéto-optique, selon la revendication 4 dans lequel le film de nitrure de métal a une épaisseur de 10 à 500 nm.

6. Dispositif de mémoire magnéto-optique, selon l'une quelconque des revendications précédentes dans lequel le film de mémoire est fait dans un alliage GdTbFe, GdTbFeCo, TbFeCo, TbCo ou TbFe.

7. Dispositif de mémoire magnéto-optique, selon la revendication 6 dans lequel le film de mémoire est fait dans un alliage GdTbFe.

8. Dispositif de mémoire magnéto-optique, selon la revendication 7 dans lequel la formule de la composition de l'alliage GdTbFe est la suivante :
(GdₓTb₁₋ₓ)_{y}Fe_{1-y}
dans laquelle x est compris entre 0,58 et 0,62 et y est compris entre 0,27 et 0,33.

9. Dispositif de mémoire magnéto-optique, conformément à l'une quelconque des revendications précédentes et dans lequel le film de mémoire a une épaisseur de 5 à 100 nm.

10. Dispositif de mémoire magnéto-optique, selon la revendication 2 ou toute revendication qui en dépend, dans lequel le premier et le second film diélectriques sont faits de nitrure de métal ou de sulfure de métal.

11. Dispositif de mémoire magnéto-optique, selon la revendication 2 ou toute revendication qui en dépend, dans lequel le premier film diélectrique a une épaisseur de 50 à 100 nm et le second film diélectrique a une épaisseur de 10 à 100 nm..

12. Dispositif de mémoire magnéto-optique, selon l'une quelconque des revendications précédentes, dans lequel le film réfléchissant la lumière est fait d'aluminium, de nickel, de titane, d'or, d'argent, de tantale, d'alliage aluminium-nickel ou d'alliage aluminium-titane.

13. Dispositif de mémoire magnéto-optique, selon l'une quelconque des revendications précédentes, dans lequel le film réfléchissant la lumière a une épaisseur de 10 à 300 nm.

14. Dispositif de mémoire magnéto-optique, selon l'une quelconque des revendications précédents, dans lequel le premier substrat est un substrat en verre, en résine polycarbonate, en résine acrylique ou en résine époxy.

15. Dispositif de mémoire magnéto-optique, selon l'une quelconque des revendications précédentes, dans lequel le second substrat est un substrat en verre, en résine polycarbonate, en résine acrylique, en résine époxy, en aluminium ou en céramique.

16. Dispositif de mémoire magnéto-optique, selon l'une quelconque des revendications précédentes, dans lequel le second substrat a un film (9) en nitrure de métal sur sa surface opposée au premier substrat.

17. Dispositif selon la revendication 1 qui a la forme d'un disque ou d'un rectangle.
